# DEMANDE DE BREVET EUROPEEN

(11) **EP 1 087 252 A1**
(43) Date de publication de la demande: **28.03.2001**
(21) Numéro de dépôt: 00402408.9
(22) Date de dépôt: 31.08.2000
(51) Int. Cl.: G02C 11/00

(54) **Equipement visuel pour le contrôle de la distance de travail en vision de près**

(30) Priorité: 24.09.1999 FR 9911941
(71) Demandeur: ESSILOR INTERNATIONAL (COMPAGNIE GENERALE D'OPTIQUE), F-94227 Charenton cédex (FR)
(72) Inventeur: Decreton, Bruno, 94220 Charenton le Pont (FR); Bonnin, Thierry, 91330 Yerres (FR); Drobe, Björn, 75011 Paris (FR); Poulain, Isabelle, 94370 Sucy en Brie (FR); Le Saux, Gilles, 75010 Paris (FR); Ahsbahs, Françoise, 94100 Saint Maur des Fosses (FR)
(74) Mandataire: Cabinet Hirsch

(57) **Abrégé**

L'invention propose une monture de lunettes (1), présentant au moins une lentille correctrice dont les caractéristiques ne varient pas dans le temps (2, 3), et qui présente des moyens de télémétrie (5). Une alarme (9, 10) est déclenchée par les moyens de télémétrie lorsque la distance mesurée par les moyens de télémétrie est inférieure à une distance de consigne prédéterminée. Cette distance de consigne peut être réglée, par exemple entre 20 et 50 cm, en fonction du porteur. L'invention propose aussi un kit (ou ensemble de pièces préassemblées) comprenant une monture, des moyens de télémétrie et une alarme (9, 10).

La monture peut être prescrite pour ralentir l'évolution de la myopie acquise à des enfants qui commencent à acquérir une myopie; la monture est alors munie de lentilles ophtalmiques multifocales progressives (2, 3). Les moyens de télémétrie et l'alarme incitent l'enfant à respecter une distance de travail suffisante en vision de près

## Description

La présente invention concerne le domaine des équipements visuels, et particulièrement un dispositif pour inciter le porteur de lunettes à respecter une distance de travail suffisante en vision de près. On a pu constater que certains porteurs ont une fâcheuse tendance à rapprocher de façon excessive leur plan de lecture ou de travail en vision de près. L'invention propose un dispositif, qui associé à des verres unifocaux, bifocaux ou progressifs permet au porteur de prendre conscience d'un tel rapprochement excessif. L'invention propose un dispositif qui incite le porteur à corriger sa posture; dans le cas de verres progressifs, en plus de la correction de la posture, l'invention incite le porteur à utiliser la zone de vision de près du verre pour un travail en vision de près. L'invention est particulièrement adaptée aux enfants myopes.

D'après les connaissances actuelles nous savons que la myopie est généralement le résultat d'un processus complexe. De mauvaises conditions de travail (mauvaise posture, éclairage insuffisant...) favoriseraient le développement de la myopie. Le travail en vision de près occupe une place prépondérante dans les activités journalières de l'enfant scolarisé. Chez l'enfant myope, c'est tout l'organisme, et pas seulement la vision, qui s'adapte aux demandes ergonomiques des conditions de travail.

Les porteurs myopes, lorsqu'ils lisent ou réalisent un travail en vision de près, ont tendance à rapprocher de façon excessive le plan de lecture ou le plan de travail. Pour cela, ils adoptent une position particulière, en se penchant sur le plan de travail. Une étude de WN Charman (1999), Near vision, lags of accommodation and myopia, Ophthalmic Physiol Opt, 19 :2, 126-33 montre que le rapprochement du plan de lecture permet d'augmenter la taille angulaire de l'objet fixé, d'augmenter la profondeur de champ par diminution du diamètre pupillaire et de diminuer les effets diffractifs de l'oeil.

La position ainsi adoptée n'est absolument pas confortable, et probablement préjudiciable pour le dos dans le cas d'un travail prolongé et fréquent en vision de près. De plus, avec le rapprochement du plan de lecture le système visuel est sollicité de façon plus importante. L'accommodation et l'angle de vergence augmentent. Une étude de M. Rosenfield (1998) Accommodation and myopia in : Myopia & nearwork (Rosenfield M. & Gilmartin G. Eds) Butterworth-Heinemann, Oxford 91-116, montre que dans ces conditions, la pression intra-oculaire augmente. L'augmentation du Lag accommodatif entraînerait une augmentation du flou rétinien.

Il est donc primordial d'inciter l'enfant myope à adopter une posture adéquate pour un travail prolongé en vision de près, non seulement afin de ménager son dos, mais en plus dans le but d'éviter ou de freiner le développement de sa myopie.

On distingue classiquement deux types de myopie, la myopie congénitale, et la myopie acquise ; la myopie congénitale est présente à la naissance du sujet, et provoque généralement de fortes myopies ; on estime qu'elle représente 4 à 6 % des porteurs myopes. La myopie acquise apparaît au cours de la vie du sujet. On distingue trois groupes parmi les sujets atteints de myopie acquise, en fonction de l'âge d'apparition de la myopie ; pour le premier groupe, la myopie apparaît vers l'âge de 6 ans, pour le second groupe au début de l'âge adulte entre 15 et 20 ans, et pour le troisième groupe à la fin de l'âge adulte vers 50 ans. Grovesnor T. (1987), A review and a suggested classification system for myopia on the basis of age-related prevalence and age of onset, Am. J. Optom. Physiol. Opt., 64 : 7, 545-54 propose ainsi une classification des myopies en fonction de l'âge d'apparition.

On a aussi pu constater que la myopie évolue au cours de la vie. Grovesnor T. (1980) Can myopia be controlled ? Part 1, Epidemiology of Myopia, Optometric Monthly, Aug., 54-58 établit que vers 6/8 ans, 5% des enfants sont myopes de - 0,50 dioptries ou plus, tandis que la proportion de sujets affectés d'une telle myopie est de 30/35% à l'âge d'entrée à l'université. A l'âge adulte, la myopie semble évoluer peu, ou en tout état de cause moins vite que chez les enfants ou les jeunes adultes.

Le pourcentage de myopes dans une population donnée semble dépendre du niveau d'études, d'après Goss DA et Jackson TW (1995) Clinical findings before the onset of Myopia in youth. I Ocular optical components Optom. Vis. Sci. 72: 12, 870-8), et le degré de myopie semble corrélé au nombre d'heures passées chaque jour en vision de près. Dans les pays occidentaux, la proportion de myopes serait comprise entre 15 et 20%. Cette proportion attendrait 50%, voire 70% dans les pays d'Asie comme la Chine et le Japon, selon Yap et autres (1994), Environmental factors and refractive error in Chinese school children, Clinical and Experimental Optometry, 77 : 1, 8-14. Dans les pays d'Afrique, la proportion de myopes autres que congénitaux serait quasiment réduite à zéro.

Il a donc été avancé que la myopie acquise serait liée au travail prolongé en vision de près, et que le niveau de myopie dépendrait du temps passé en vision de près. Les optométristes ont donc proposé des solutions pour tenter de ralentir la progression de la myopie acquise.

Une première solution consiste à prescrire au porteur une correction inférieure à la valeur de sa myopie en vision de loin ; l'idée est de réduire l'effort d'accommodation pour passer de la vision de loin à la vision de près. Voir par exemple Tokoro T., Kobe S. (1965) Treatment of the myopia and the changes in optical components, Report II. Full or under-correction of myopia by glasses, Acta Soc. Ophtalmol. Jp., 69, 140-44. Ce type de méthode est contesté, et n'a pas fait la preuve de son efficacité.

Une autre solution, consiste à prescrire au porteur une correction trop importante en vision de loin ; de fait l'amétropie des jeunes hypermétropes est plus stable dans le temps que celle des jeunes myopes, et l'idée était de rendre les jeunes myopes hypermétropes en leur prescrivant une correction trop importante. Voir par exemple Goss DA (1984) Overcorrection as a means of slowing myopic progression, Am. J. Optom. Physiol. Opt., 61 : 2, 85-93. L'intérêt de cette méthode n'a pas non plus été démontré.

Des auteurs comme Bates cité par Grosvenor T. (1980) Can myopia be controlled ? Part 2, The Bates system of eye exercices, Optometric Monthly, sept. 50-54, ont proposé un entraînement visuel : des expériences visuelles répétées, de la relaxation, ainsi que des exercices pour soulager la tension des yeux. L'effet sur l'amétropie du sujet n'est pas avéré.

Enfin, des optométristes, ont tenté de ralentir l'évolution de la myopie en prescrivant au sujet une addition en vision de près ; on indique dans ce cas au patient de regarder à travers la pastille du verre pour travailler en vision de près, cette pastille présentant la puissance nécessaire en vision de près. L'addition en vision de près aurait pour effet de réduire l'effort d'accommodation en vision de près, et de normaliser les phories en vision de près. Des études ont été menées sur la prescription de doubles foyers ou de verres progressifs à des enfants; on pourra notamment consulter Goss DA. Uyesugi EF. (1995) Effectiveness of bifocal control of childhood myopia progression as a fonction of near point phoria and binocular cross-cylinder, J. Optom. Vis. Dev., 26, 12-17 et Mur et al. (1991) Evolution de la myopie d'enfants compensée par progressifs, Bulletin de la S.S.C.O., 1, 87-92. Les résultats des études menées sur le sujet montrent que la prescription d'une addition ne semble pas efficace pour tous les myopes.

Il existe par ailleurs divers dispositifs utilisant une mesure de distance entre la monture d'un porteur et le point regardé par le porteur. US-A-5 359 444 décrit des lunettes avec des lentilles contenant un matériau nématique, d'indice de réfraction variable en fonction d'une tension appliquée au matériau. La tension appliquée au matériau est fonction d'une distance mesurée par un dispositif de télémétrie infrarouge, de sorte que les lentilles soient toujours focalisées à la distance du point observé par le porteur. Le dispositif de télémétrie infrarouge comprend un émetteur et un récepteur disposés de part et d'autre de la monture.

US-A-4 181 408 décrit des lunettes avec des lentilles déformables. La déformation des parois des lentilles change la puissance des lentilles. La monture présente aussi un dispositif de mesure de la position angulaire des yeux du porteur : une source infrarouge illumine les yeux du porteur, et un capteur détecte la position des iris. La puissance des lentilles est réglée en fonction de la position angulaire des yeux du porteur.

US-A-5 182 585 décrit des lunettes du même genre, avec des lentilles déformables. Pour régler la puissance des lentilles, ce document propose d'utiliser un dispositif de télémétrie fixé sur la monture plutôt qu'une mesure de la position angulaire des yeux du porteur.

WO-A-9717043 décrit des lunettes pour porteur aveugle. Une pluralité d'émetteurs et récepteurs infrarouges est disposée sur la surface de verres de lunettes de soleil; une électronique afférente traduit les mesures de distance en des mesures perceptibles par le porteur.

L'abrégé du brevet japonais JP-A-09 259 366 décrit une paire de lunettes permettant à un pilote de détecter que la machine qu'il conduit approche d'un obstacle. Ces lunettes sont munies d'émetteurs de lumière rouge dans la partie supérieure de la monture, ainsi que d'émetteurs sonores sur les branches. Le système est, pour autant que l'on puisse le comprendre, destiné à des conducteurs de trains. Les lunettes sont munies d'alarmes visuelles et sonores, qui fournissent à leur porteur une indication de la distance entre la position fournie par un GPS et la position d'un obstacle fournie par une carte de ligne de transmission de puissance et un dispositif d'entrée d'information.

Sont aussi connues des lentilles ophtalmiques multifocales progressives. Ces lentilles présentent une puissance qui varie continûment, entre une puissance nominale à un point de référence pour la vision de loin, situé dans le haut de la lentille, et un point de référence pour la vision de près, situé dans le bas de la lentille. Ces lentilles sont prescrites à des porteurs presbytes ; on appelle addition la différence entre la puissance au point de référence pour la vision de près et la puissance au point de référence pour la vision de loin. De telles lentilles sont décrites par exemple dans FR-A-2 769 998, FR-A-2 769 999 ou encore FR-A-2 770 000.

Il existe donc un besoin d'une solution permettant d'indiquer au porteur des lunettes qu'il se rapproche trop du plan de lecture en vision de près. L'invention propose une solution à ce problème.

Plus précisément, l'invention propose une monture de lunettes, présentant au moins une lentille correctrice dont les caractéristiques ne varient pas dans le temps et caractérisée par des moyens de télémétrie. Ces moyens de télémétrie mesure la distance entre la monture et le point fixé par le porteur, ou la distance entre la monture et le plan de travail.

Dans un mode de réalisation, la lentille présente une puissance négative, adaptée à la correction d'un porteur myope en vision de loin. Dans un autre mode de réalisation, la lentille est une lentille unifocale, bifocale ou multifocale progressive.

De préférence, la monture présente en outre une alarme déclenchée par les moyens de télémétrie lorsque la distance mesurée par les moyens de télémétrie est inférieure à une distance de consigne prédéterminée.

Dans un autre mode de réalisation, la monture présente une alarme déclenchée par les moyens de télémétrie lorsque la distance mesurée par les moyens de télémétrie reste inférieure pendant une durée prédéterminée à une distance de consigne prédéterminée. Cette durée prédéterminée est avantageusement supérieure à la durée habituelle de passage des objets fugitifs devant la monture, et peut par exemple valoir 3 s. De préférence, la durée prédéterminée est réglable.

Dans un autre mode de réalisation, la distance de consigne est inférieure à la distance entre la monture et le plan de travail dans une position normale du porteur. Cette distance peut par exemple être déterminée en fonction de la distance de Harmon du porteur. Cette distance est définie plus bas.

Avantageusement, la distance de consigne est comprise entre 20 et 50 cm.

Dans un autre mode de réalisation, les moyens de télémétrie sont amovibles. L'alarme peut être une alarme visuelle.

L'invention propose aussi un kit (ensemble de pièces préassemblées) comprenant une monture de lunettes, des moyens de télémétrie et une alarme déclenchée par les moyens de télémétrie lorsque la distance mesurée par les moyens de télémétrie est inférieure à une distance de consigne prédéterminée.

Il est avantageux que l'alarme soit déclenchée par les moyens de télémétrie lorsque la distance mesurée par les moyens de télémétrie reste inférieure pendant une durée prédéterminée à une distance de consigne prédéterminée; notamment, la durée prédéterminée est de préférence supérieure à la durée habituelle de passage des objets fugitifs devant la monture. On peut choisir une durée de 3 s, ou prévoir que la durée prédéterminée est réglable.

Dans un mode de réalisation, la distance de consigne est inférieure à la distance entre la monture et le plan de travail dans une position normale du porteur. Cette distance peut être déterminée en fonction de la distance de Harmon du porteur, et peut être comprise entre 20 et 50 cm.

Le kit peut aussi comprendre au moins une lentille dont les caractéristiques ne varient pas dans le temps, et par exemple une lentille de puissance négative, ou une lentille unifocale, bifocale ou multifocale progressive.

D'autres caractéristiques et avantages de l'invention apparaîtront à la lecture de la description qui suit de modes de réalisation de l'invention, donnée à titre d'exemple et en référence aux dessins annexés, qui montrent
- figure 1, une représentation schématique d'une monture selon l'invention ;
- figure 2, un schéma électronique d'un mode de réalisation de l'invention.

L'invention propose un dispositif permettant d'indiquer à un porteur que la distance au plan de travail en vision de près est inadaptée.

Dans la suite de la description, l'invention est décrite dans une première application, dans laquelle l'invention propose de prescrire à des enfants myopes des verres progressifs.

Elle propose en outre dans ce cas, pour assurer une distance de travail correcte en vision de près, de munir la monture d'un dispositif de télémétrie. Comme les verres progressifs, à l'inverse des verres bifocaux, ne présentent pas une zone de vision de près clairement identifiable par le porteur, l'invention permet au porteur de savoir si la distance au plan de travail en vision de près est correcte, autrement dit s'il utilise effectivement la zone de vision de près pour les travaux en vision de près.

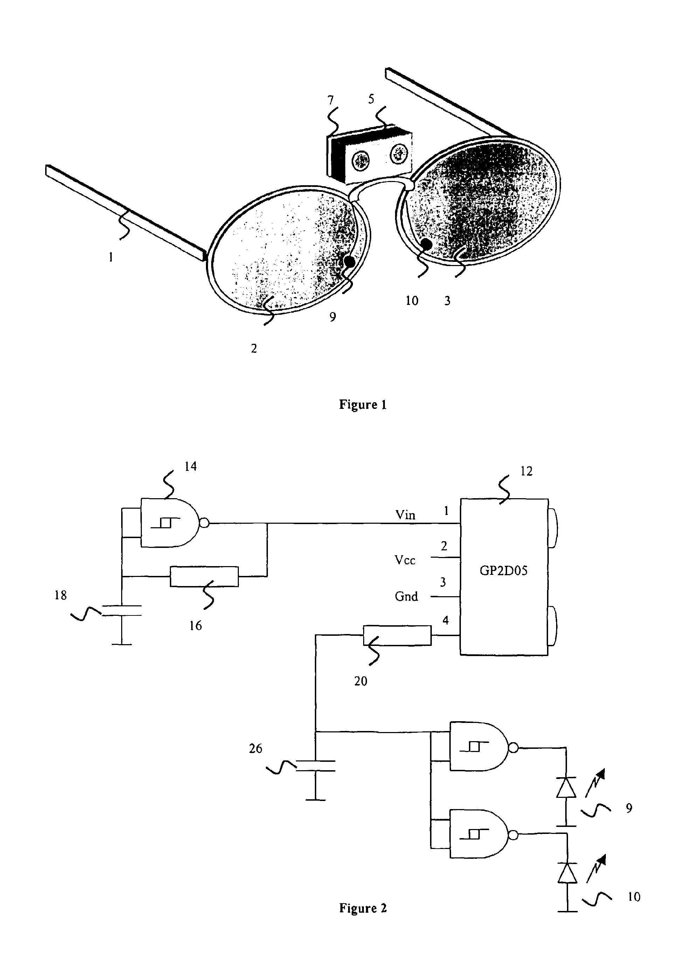

La figure 1 montre une représentation schématique d'une monture selon l'invention ; la monture 1 présente donc au moins une lentille progressive 2 ou 3, c'est-à-dire une lentille présentant une puissance variant continûment entre une valeur de puissance adaptée à la vision de loin et une valeur de puissance adaptée à la vision de près. Elle présente en outre des moyens de télémétrie 5 pour mesurer la distance au point fixé par le porteur, ou la distance entre le plan de travail et la lentille de la monture. En d'autres termes, les moyens de télémétrie mesurent la distance entre la monture (ou la lentille de la monture) et un obstacle situé devant la monture; cet obstacle est en fait le point fixé par le porteur ou le plan de travail, qui est devant le porteur. Les moyens de télémétrie peuvent donc mesurer la distance entre la monture (ou la lentille de la monture) et le plan de travail ou le point fixé par le porteur dans ce plan de travail.

Dans le mode de réalisation de la figure 1, les moyens de télémétrie comprennent des moyens infrarouges, et plus spécifiquement une diode d'émission infrarouge et un capteur sensible aux infrarouges ; on peut pour les moyens de télémétrie utiliser un composant comme celui vendu par la société japonaise Sharp sous la référence GP2D05. Ce composant fonctionne en tout ou rien, et fournit en sortie un potentiel d'une valeur différente selon que la distance mesurée est supérieure ou inférieure à une valeur de consigne. Cette valeur de consigne est réglable à l'aide d'un potentiomètre.

On peut bien entendu utiliser d'autres moyens de télémétrie que le composant précité; les moyens de télémétrie peuvent fournir un signal représentatif de la distance, et non pas un signal tout ou rien ; ils peuvent aussi utiliser d'autres types de mesure qu'une mesure infrarouge, comme une mesure dans une autre plage de longueur d'ondes, une mesure de la position des pupilles du porteur, ou encore une mesure par ultrasons.

La figure 1 montre en outre un boîtier 7, qui est relié aux moyens de télémétrie, et qui dans le mode de réalisation de la figure contient l'alimentation du composant utilisé, ainsi que l'horloge qui est appliquée en entrée du composant ; cette horloge cadence les mesures par le dispositif de télémétrie. Une fréquence de 2 Hz est appropriée.

Les moyens de télémétrie peuvent déclencher une alarme lorsque le porteur se trouve trop proche du plan de travail. Cette alarme permet une utilisation optimale de la lentille progressive, en incitant le porteur à retrouver une position naturelle et confortable en vision de près. L'alarme est avantageusement déclenchée lorsque la distance mesurée par les moyens de télémétrie est inférieure à une distance de consigne prédéterminée ; une valeur de 20 à 50 cm pour la distance de consigne est appropriée. Il est aussi possible de permettre un réglage de cette distance de consigne, par exemple un réglage par l'opticien fournissant la monture, en fonction de l'âge et de la morphologie du porteur. L'opticien pourrait par exemple régler la distance de consigne à la distance de Harmon. Cette distance correspond à la distance entre la pointe du coude, et la jonction pouce-index du porteur. Selon Harmon, cette distance est idéale pour le travail en vision de près. Dans le mode de réalisation de la figure 1, un potentiomètre de réglage de la distance de consigne est disposé dans le boîtier 7.

L'alarme peut être de toute nature, visuelle, sonore, tactile, ou autre. Dans un mode de réalisation préféré, il s'agit d'une alarme visuelle, qui présente l'avantage de pouvoir être utilisée sans nuisance en public, et par exemple dans une salle de classe. Cette alarme peut être constituée de deux diodes électroluminescentes 9 et 10, disposées sur la monture, de sorte à être facilement visibles par le porteur. Ces diodes peuvent clignoter à la fréquence de l'horloge, grâce à un dispositif de commande dans le boîtier 7.

Il est encore avantageux de prévoir une temporisation pour éviter de déclencher l'alarme lorsqu'un objet passe ponctuellement entre la monture et le plan de travail ; un tel passage d'objet peut être détecté par les moyens de télémétrie, et conduire à une mesure de distance inférieure à la distance de consigne mentionnée plus haut. Afin d'éviter un déclenchement d'alarme intempestif, il est possible de prévoir une temporisation. De la sorte, l'alarme n'est déclenchée que si la distance mesurée reste en dessous de la valeur de consigne pendant une durée prédéterminée. Une durée de l'ordre de 3 s est appropriée, et s'avère supérieure à la durée habituelle de passage des objets fugitifs entre la monture et le plan de travail.

La figure 2 montre un schéma électronique d'un mode de réalisation de l'invention. Le schéma montre le composant GP2D05, référencé 12, qui présente quatre terminaux ; le premier terminal Vin est relié à la sortie d'un oscillateur constitué d'une porte logique 14 du type trigger ou bascule de Schmidt (comparateur à hystérésis), d'un condensateur 18 et d'une résistance 16. Le deuxième terminal du composant 12 est le terminal d'alimentation et est relié à la tension d'alimentation Vcc. Le troisième terminal est le terminal de masse Gnd, et est relié à la masse. Le quatrième terminal est le terminal de sortie, qui fournit le signal de sortie. Il est relié au système de temporisation constitué de la résistance (20) et du condensateur (26). Le point milieu de ces composants alimente l'entrée de deux triggers de Schmidt servant de tampons qui alimentent les diodes.

Le fonctionnement du montage de la figure 2 est le suivant. Lorsque la distance mesurée par les moyens de télémétrie est inférieure à la distance de consigne, le quatrième terminal fournit en sortie un signal de sortie, qui oscille au rythme du signal appliqué au premier terminal entre la tension d'alimentation et zéro volt. Les diodes ne sont pas encore alimentées, car le système de temporisation est en fonctionnement (charge du condensateur 26). Tant que le condensateur 26 n'est pas chargé, la tension résiduelle de filtrage ne permet pas de déclencher les bascules de Schmidt, et ne provoque donc pas l'oscillation des diodes. Lorsque le condensateur est chargé, les bascules sont déclenchées, et les diodes oscillent. Dans le cas où la distance de mesure serait supérieure à la distance de consigne, la broche 4 fournit un signal continu de valeur Vcc. Il y a donc en sortie des bascules de Schmidt une valeur égale à la masse. Dans ce cas, les diodes ne sont pas allumées.

L'invention permet ainsi, lorsque la distance au plan de travail est trop faible, d'indiquer à l'aide de l'alarme au porteur qu'il doit modifier sa position ; ainsi, lorsque le porteur commence à travailler en vision de près, et s'approche trop du plan de travail, suivant la tendance bien connue des myopes, on l'alerte et il peut rectifier sa position. De la sorte, dans l'exemple de l'enfant à qui ont été prescrits des verres progressifs, l'enfant est incité à utiliser la zone de vision de près de la lentille progressive ou des lentilles progressives.

On décrit maintenant le protocole de prescription selon l'invention. Comme indiqué plus haut, l'invention s'applique de préférence aux enfants myopes, vers un âge de 6/8 ans, lorsque commencent à apparaître les signes d'une myopie acquise.

On prescrit à l'enfant porteur des lentilles progressives adaptées à sa correction. Le porteur est supposé porter les lunettes de l'invention, pour ses travaux en vision de près, et notamment pour la lecture ou l'écriture. On lui indique qu'il convient de relever la tête pour utiliser la partie inférieure des lentilles pour tous les travaux en vision de près, et que l'alarme lui indique que la distance est trop faible ; le cas échéant, l'opticien règle la distance de consigne en fonction de la morphologie du porteur, et il peut par exemple se baser sur la distance de Harmon.

L'invention s'applique non seulement à l'exemple décrit en détail de prescription de verres progressifs à un porteur enfant, mais aussi à toutes les situations dans lesquelles il est opportun d'indiquer au porteur que la distance au plan de travail en vision de près est incorrecte. Elle peut être utilisée avec des verres unifocaux ou bifocaux, ou comme dans l'exemple, avec des verres progressifs. Dans tous les cas, à l'inverse de l'art antérieur, les verres utilisés dans l'invention sont des verres correctifs, dont les caractéristiques ne varient pas au cours du temps. Il peut s'agir de verres organiques ou de verres minéraux.

Bien entendu, la présente invention n'est pas limitée aux exemples et modes de réalisation décrits et représentés, mais elle est susceptible de nombreuses variantes accessibles à l'homme de l'art.

Ainsi, dans le mode de réalisation préféré, les moyens de télémétrie sont fixés sur la monture. On peut plus généralement rendre ces moyens solidaires de la tête du porteur, sans nécessairement les fixer sur la monture; ainsi, on peut utiliser un autre support, par exemple un bandeau élastique, ou encore prévoir un montage amovible des moyens de télémétrie sur la monture. L'invention peut dans ce cas comprendre un kit (ou ensemble de pièces préassemblées) avec une monture, et des moyens de télémétrie avec une alarme.

Il est aussi possible d'utiliser d'autres composants que ceux qui sont décrits plus haut ; on peut intégrer l'ensemble des moyens de télémétrie, de l'alarme, et de l'électronique associée dans un boîtier unique porté par la monture ; l'alimentation électrique peut être disposée sur la monture, ou encore être distincte de la monture et électriquement reliée aux moyens de télémétrie.

## Revendications

1. Une monture de lunettes (1), présentant au moins une lentille correctrice dont les caractéristiques ne varient pas dans le temps (2, 3), caractérisée par des moyens de télémétrie (5) mesurant la distance entre la lentille de la monture et le point fixé par le porteur.

2. La monture de la revendication 1 caractérisée en ce que la lentille est de puissance négative.

3. La monture de la revendication 1 caractérisée en ce que la lentille est une lentille unifocale, bifocale ou multifocale progressive.

4. La monture de la revendication 1, 2 ou 3, caractérisée en ce qu'elle présente en outre une alarme (9, 10) déclenchée par les moyens de télémétrie lorsque la distance mesurée par les moyens de télémétrie est inférieure à une distance de consigne prédéterminée.

5. La monture de la revendication 1, 2 ou 3, caractérisée en ce qu'elle présente en outre une alarme (9, 10) déclenchée par les moyens de télémétrie lorsque la distance mesurée par les moyens de télémétrie reste inférieure pendant une durée prédéterminée à une distance de consigne prédéterminée.

6. La monture de la revendication 5, caractérisée en ce que la durée prédéterminée est supérieure à la durée habituelle de passage des objets fugitifs devant la monture .

7. La monture de la revendication 5 ou 6, caractérisée en ce que la durée prédéterminée est de 3 s.

8. La monture de la revendication 5, 6 ou 7, caractérisée en ce que la durée prédéterminée est réglable.

9. La monture de l'une des revendications 4 à 8, caractérisée en ce que la distance de consigne est inférieure à la distance entre la monture et le plan de travail dans une position normale du porteur.

10. La monture de l'une des revendications 4 à 9, caractérisée en ce que la distance de consigne est déterminée en fonction de la distance de Harmon du porteur.

11. La monture de l'une des revendications 4 à 10, caractérisée en ce que la distance de consigne est comprise entre 20 et 50 cm.

12. La monture de l'une des revendications 1 à 11, caractérisée en ce que les moyens de télémétrie sont amovibles.

13. La monture de l'une des revendications 4 à 12, caractérisée en ce que l'alarme est une alarme visuelle.

14. Un kit comprenant une monture de lunettes (1), des moyens de télémétrie (5) mesurant la distance entre la lentille de la monture et le point fixé par le porteur et une alarme (9, 10) déclenchée par les moyens de télémétrie lorsque la distance mesurée par les moyens de télémétrie est inférieure à une distance de consigne prédéterminée.

15. Le kit de la revendication 14, caractérisé en ce que l'alarme (9, 10) est déclenchée par les moyens de télémétrie lorsque la distance mesurée par les moyens de télémétrie reste inférieure pendant une durée prédéterminée à une distance de consigne prédéterminée.

16. Le kit de la revendication 15, caractérisé en ce que la durée prédéterminée est supérieure à la durée habituelle de passage des objets fugitifs devant la monture .

17. Le kit de la revendication 15 ou 16, caractérisé en ce que la durée prédéterminée est de 3 s.

18. Le kit de la revendication 15, 16 ou 17, caractérisé en ce que la durée prédéterminée est réglable.

19. Le kit de l'une des revendications 14 à 18, caractérisé en ce que la distance de consigne est inférieure à la distance entre la monture et le plan de travail dans une position normale du porteur.

20. Le kit de l'une des revendications 14 à 19, caractérisé en ce que la distance de consigne est déterminée en fonction de la distance de Harmon du porteur

21. Le kit de l'une des revendications 14 à 20, caractérisé en ce que la distance de consigne est comprise entre 20 et 50 cm.

22. Le kit de l'une des revendications 14 à 19, caractérisé en ce que les moyens de télémétrie sont montables de façon amovible sur la monture.

23. Le kit de l'une des revendications 14 à 22, caractérisé en ce que l'alarme est une alarme visuelle.

24. Le kit de l'une des revendications 14 à 23, caractérisé en ce qu'il comprend au moins une lentille dont les caractéristiques ne varient pas en fonction du temps.

25. Le kit de la revendications 24, caractérisé en ce que le kit comprend une lentille unifocale, bifocale ou multifocale progressive.
